**Europäisches Patentamt**

**European Patent Office**

**Office européen des brevets**

(11) Publication number : **0 544 503 A1**

## (12) EUROPEAN PATENT APPLICATION

(21) Application number : **92310745.2**

(22) Date of filing : **24.11.92**

(51) Int. Cl.$^5$ : **C01G 1/10, C01F 5/40, C01G 53/00, C01G 51/00, C01G 9/00, C01G 3/00, C01G 49/00, C04B 35/00, D01F 9/08**

(30) Priority : **26.11.91 JP 336129/91**

(43) Date of publication of application : **02.06.93 Bulletin 93/22**

(84) Designated Contracting States : **AT CH DE FR GB IT LI**

(71) Applicant : **KYOWA CHEMICAL INDUSTRY CO., LTD.**
**305, Yashimanishi-machi**
**Takamatsu-shi Kagawa-ken (JP)**

(72) Inventor : **Okada, Akira**
**10-12, Ritsurin-cho 3-chome**
**Takamatsu-shi, Kagawa-ken (JP)**
Inventor : **Imahashi, Takeshi**
**89-6, Zotanomada, Nagao-cho**
**Ohkawa-gun, Kagawa-ken (JP)**
Inventor : **Hirose, Toru**
**1154-3, Sue, Shido-cho**
**Ohkawa-gun, Kagawa-ken (JP)**

(74) Representative : **Myerscough, Philip Boyd**
**J.A. Kemp & Co. 14 South Square, Gray's Inn**
**London WC1R 5LX (GB)**

(54) **Flame-retardant aid, process for the production thereof, and flame-retardant resin composition.**

(57)    A flame retardant aid which helps provide an excellent flame-retardant polyolefin resin composition without impairing excellent mechanical properties of the polyolefin resin, a process for the production thereof and a polyolefin resin containing the same. The flame-retardant aid is a fibrous basic magnesium sulfate compound of the formula (1),

$$Mg_{6-(x-y)}Ni_xM_y(OH)_{10}SO_4 \cdot 3H_2O \quad (1)$$

wherein M is at least one divalent metal element selected from Ni, Co, Zn, Cu and Fe, $\underline{0} < x \leqq 1.5$, and $0 \leqq y \leqq 1.0$, provided that x and y cannot simultaneously be zero.

EP 0 544 503 A1

## FIELD OF THE INVENTION

The present invention relates to a flame-retardant aid, a process for the production thereof and a flame-retardant resin composition containing the flame-retardant aid. More specifically, it relates to a flame-retardant aid capable of imparting a polyolefin resin with high flame retardancy without impairing the mechanical properties of the polyolefin resin, a process for the production thereof and a flame-retardant resin composition containing the flame-retardant aid.

## PRIOR ART

Polyolefin resins have been conventionally imparted with flame retardancy by a method in which halogenated organic compounds are incorporated into the polyolefin resins. However, this method has a risk that harmful gas and smoke generated from such organic compounds in fire may induce secondary disaster. To cope with this risk, there have been proposed a number of polyolefin resin compositions containing halogen-free materials such as aluminum hydroxide and magnesium hydroxide.

For imparting polyolefin resins with high flame retardancy, it is required to incorporate a large amount of an inorganic flame retardant such as magnesium hydroxide. As a result, there is a problem in that the excellent mechanical properties inherent to polyolefin resin are impaired.

## SUMMARY OF THE INVENTION

It is an object of the present invention to provide a flame-retardant aid which is capable of imparting a polyolefin resin with flame retardancy without impairing the mechanical properties of the polyolefin resin, a process for the production of said flame-retardant aid, and a polyolefin resin containing the flame-retardant aid.

It is another object of the present invention to provide a flame-retardant which is capable of producing a flame-retarding effect in a small amount, a process for the production the flame-retardant aid, and a polyolefin resin composition containing the flame-retardant aid.

According to the present invention, there is provided a flame-retardant aid composed of a fibrous basic magnesium sulfate compound of the formula (1),

$$Mg_{6-(x+y)}Ni_xM_y(OH)_{10}SO_4 \cdot 3H_2O \qquad (1)$$

wherein M is at least one divalent metal element selected from the group consisting of Co, Zn, Cu and Fe, x is defined by $0 < x \leqq 1.5$, and y is defined by $0 \leqq y \leqq 1.0$, provided that x and y cannot be simultaneously zero.

Further, according to the present invention, there is also provided a process for the production of the above flame-retardant aid, which comprises the steps of;

(A) dissolving sulfate, chloride or nitrate of at least one metal selected from Ni, Co, Zn, Cu and Fe in a magnesium sulfate aqueous solution,

(B) dispersing or dissolving magnesium hydroxide or magnesium oxide in the above aqueous solution to prepare a dispersion or solution containing 0.1 to 20 % by weight of the magnesium hydroxide or magnesium oxide, and

(C) hydrothermally reacting the dispersion or solution at a temperature approximately between 100°C and 250°C.

Further, according to the present invention, there is also provided a flame-retardant resin composition containing 20 to 60 parts by weight of a polyolefin resin, 5 to 45 parts by weight of the above flame-retardant aid and 15 to 50 parts by weight of a flame retardant.

## DETAILED DESCRIPTION OF THE INVENTION

The present inventors have made a diligent study to overcome the above problem, and found that the fibrous basic magnesium sulfate compound of the above formula (1) has excellent properties as a flame-retardant aid. On the basis of this finding, the present invention has been completed. Having the form of a fiber, this flame-retardant aid also has a function/effect of strengthening the mechanical properties of a resin composition such as tensile strength, flexural strength and flexural modulus.

The fibrous basic magnesium sulfate compound of the formula (1) is a solid solution obtained by replacing part of magnesium of fibrous $Mg_6(OH)_{10}SO_4 \cdot 3H_2O$ disclosed in JP-A-56-149318 with at least one divalent metal element selected from Ni, Co, Zn, Cu and Fe. These divalent metal elements have an ionic radius relatively similar to that of magnesium, and easily replace part of the magnesium to form a solid solution.

In the formula (1), x for the amount of nickel is limited to 1.5 or less, and y for the amount of the divalent metal element represented by M is limited to 1.0 or less for reasons that, with an increase in the above amounts, the crystal water elimination temperature shifts towards a lower temperature side and that the specific gravity of the solid solution disadvantageously increases. The above x and y are preferably 0.5 or less each. The fibrous basic magnesium sulfate compound of the present invention has a length/diameter ratio of at least about 10, an average diameter of approximately 0.1 to 5 $\mu$m, and a length of approximately 0.1 to 1,000 $\mu$m. These values are determined by observing the fibrous basic magnesium sulfate compound through a scanning electron microscope, e.g., at a magnification of 1,000 times.

The fibrous basic magnesium sulfate compound of the present invention shows an excellent flame-retardant aid effect over known fibrous $Mg_6(OH)_{10}SO_4 \cdot 3H_2O$. The reason therefor is not necessarily clear. However, it is assumed that the fibrous basic magnesium sulfate compound of the present invention has excellent catalysis to promote carbonization.

The fibrous basic magnesium sulfate compound of the present invention is produced by dissolving sulfate, chloride or nitrate of at least one divalent metal element selected from Ni, Co, Zn, Cu and Fe in a magnesium sulfate aqueous solution containing 0.1 to 3 mol/l of magnesium sulfate, dispersing or dissolving magnesium hydroxide or magnesium oxide in the above aqueous solution to prepare a dispersion or solution containing 0.1 to 20 % by weight of the magnesium hydroxide or magnesium oxide, and hydrothermally reacting the dispersion or solution at a temperature approximately between 100°C and 250°C for several hours. The above sulfate, chloride and nitrate include nickel chloride (anhydride), nickel chloride·6H$_2$O, nickel nitrate·6H$_2$O, nickel sulfate·7H$_2$O, cobalt chloride (anhydride), cobalt chloride·6H$_2$O, cobalt nitrate·6H$_2$O, cobalt sulfate·7H$_2$O, zinc nitrate·6H$_2$O, zinc sulfate·7H$_2$O, cupric chloride (anhydride), cupric chloride·2H$_2$O, copper nitrate·3H$_2$O, copper sulfate (anhydride), copper sulfate·5H$_2$O, ferric chloride (anhydride), ferric chloride·6H$_2$O, ferric nitrate·9H$_2$O and ferric sulfate·9H$_2$O.

The fibrous basic magnesium sulfate compound of the present invention may be directly incorporated into a polyolefin resin. Further, before use, it may be surface-treated with various surface treating agents to improve its affinity to a resin, the mechanical strength of the resin, and the water resistance and acid resistance of said compound. In this case, the amount of the surface treating agent per 100 parts by weight of the fibrous basic magnesium sulfate compound is preferably approximately 0.1 to 10 parts by weight. The surface treating agent includes higher fatty acids such as oleic acid, stearic acid, palmitic acid, behenic acid, myristic acid, lauric acid and montanic acid; silane coupling agents such as vinylethoxysilane, vinyl·tris(2-methoxy)silane and gamma·methacryloxypropyltrimethoxysilane; titanate-containing coupling agents such as isopropyltriisostearoyltitanate, isopropyltris(dioctylpyrophosphate)titanate and isopropyltridecylbenzenesulfonyltitanate; aluminum-containing agents such as acetoalkoxyaluminumdiisopropionate, and mono- or diester salt of orthophosphoric acid and stearyl alcohol.

The flame-retardant resin composition of the present invention may contain other additives which are generally incorporated into polyolefin resins. The other additives include an antioxidant, an ultraviolet absorbing agent, an antistatic agent, a lubricant, a pigment, a foaming agent, a plasticizer, a filler, a reinforcing agent, an organic halogen-containing flame retardant, carbon black, tin and a tin compound, a flame-retardant aid such as red phosphorus, and a crosslinking agent.

The polyolefin resin used in the present invention includes a propylene homopolymer, propylene-ethylene block copolymer and random copolymer, a propylene-ethylene-diene copolymer, polyethylene, an ethylene-vinyl acetate copolymer, an ethylene-ethyl acrylate copolymer, polybutene-1, and poly-4-methylpentene-1. These polyolefin resins may be used alone or in combination.

The flame-retardant resin of the present invention can be produced by a general kneading method using any one of a roll, a Banbury mixer, a kneader, a single-screw extruder and a twin-screw extruder. For kneading, the fibrous basic magnesium sulfate compound of the present invention may be in a powder state, while it is preferably in a granular state. In view of processability in a polyolefin resin, appearance of a molded article, mechanical strength of a molded article, the BET specific surface area of the fibrous basic magnesium sulfate compound of the present invention is 30 g/m$^2$ or less, preferably 20 g/m$^2$ or less. The flame-retardant resin composition of the present invention preferably contains 20 to 60 parts by weight of a polyolefin resin, 5 to 45 parts by weight of the fibrous basic magnesium sulfate compound of the present invention, and 15 to 50 parts by weight of a flame retardant such as magnesium hydroxide or aluminum hydroxide. The flame-retardant resin composition of the present invention is excellent in flame retardancy and retains the mechanical properties of the polyolefin resin.

The present invention provides a flame-retardant aid capable of giving a flame-retardant resin composition having excellent mechanical properties, and a process for the production of said flame-retardant aid. The present invention further provides a flame-retardant resin composition containing a flame retardant and the above flame-retardant aid in combination and having excellent mechanical properties.

The present invention will be described further in detail by reference to Examples.

Example 1

An autoclave having a volume of about 100 liters was charged with 60 liters of a magnesium sulfate aqueous solution containing 1.2 mol/l of magnesium sulfate, and 226 g of nickel sulfate·7H$_2$O was added to, and dissolved in, the magnesium sulfate aqueous solution. Then, 645 g of magnesium oxide was added to, and dispersed in, the resultant mixed solution. The resultant mixture was hydrothermally reacted at 170°C for 3 hours. The reaction product was recovered by washing and filtering the reaction mixture, and then dispersed in water to form a slurry. Then, 1 liter of sodium oleate solution containing 24 g/l of sodium oleate was added, and the resultant mixture was stirred at 80°C for 1 hour. The reaction mixture was filtered, and the remaining solid was washed and dried to give a reaction product. The reaction product was measured by powder X-ray diffractometry and chemical analysis. The reaction product was a fibrous basic magnesium sulfate compound containing 1.4 % by weight of oleic acid and having the formula of Mg$_{5.76}$Ni$_{0.24}$(OH)$_{10}$SO$_4$·3H$_2$O.
　　*Chemical analysis values
　　　　MgO: 50.6 % by weight
　　　　NiO: 3.9 % by weight
　　　　SO$_4$: 21.2 % by weight
　　　　Ignition loss: 44.5 %
　　　　BET specific surface area: 6.9 m$^2$/g
　　* Measurement by observation through electron microscope (at magnification of 1000 times)
　　　　Length/diameter ratio: 15 - 60
　　　　Average diameter: 0.5 μm
　　　　Length: approximately 5 - 30 μm

Example 2

An autoclave having a volume of about 100 liters was charged with 50 liters of a magnesium sulfate aqueous solution containing 1.2 mol/l of magnesium sulfate, and 209 g of cobalt sulfate·7H$_2$O was added to, and dissolved in, the magnesium sulfate aqueous solution. Then, 571 g of magnesium oxide was added to, and dispersed in, the resultant mixed solution. The resultant mixture was hydrothermally reacted at 170°C for 5 hours. The reaction product was recovered by washing and filtering the reaction mixture, and then dispersed in water to form a slurry. Then, 1 liter of sodium stearate solution containing 45 g/l of sodium stearate was added, and the resultant mixture was stirred at 80°C for 1 hour. The reaction mixture was filtered, and the remaining solid was washed and dried to give a reaction product. The reaction product was measured by powder X-ray diffractometry and chemical analysis. The reaction product was a fibrous basic magnesium sulfate compound containing 2.7 % by weight of stearic acid and having the formula of Mg$_{5.76}$Co$_{0.3}$(OH)$_{10}$SO$_4$-3H$_2$O.
　　*Chemical analysis values
　　　　MgO: 49.0 % by weight
　　　　CoO: 4.58 % by weight
　　　　SO$_4$: 20.91 % by weight
　　　　Ignition loss: 40.9 %
　　　　BET specific surface area: 10.5 m$^2$/g
　　* Measurement by observation through electron microscope (at magnification of 1000 times)
　　　　Length/diameter ratio: 13 - 50
　　　　Average diameter: 0.4 μm
　　　　Length: approximately 5 - 20 μm

Example 3

An autoclave having a volume of about 100 liters was charged with 50 liters of a magnesium sulfate aqueous solution containing 1.2 mol/l of magnesium sulfate, and 72 g of copper sulfate·5H$_2$O was added to, and dissolved in, the magnesium sulfate aqueous solution. Then, 571 g of magnesium oxide was added to, and dispersed in, the resultant mixed solution. The resultant mixture was hydrothermally reacted at 170°C for 5 hours. The reaction product was recovered by washing and filtering the reaction mixture, and then dispersed in water to form a slurry. Then, 1 liter of sodium oleate solution containing 28 g/l of sodium oleate was added, and the resultant mixture was stirred at 80°C for 1 hour. The reaction mixture was filtered, and the remaining solid was washed and dried to give a reaction product. The reaction product was measured by powder X-ray diffractometry and chemical analysis. The reaction product was a fibrous basic magnesium sulfate compound containing 2.0 % by weight of oleic acid and having the formula of Mg$_{5.9}$Cu$_{0.1}$(OH)$_{10}$SO$_4$·3H$_2$O.

∗Chemical analysis values

MgO: 50.7 % by weight

CuO: 1.71 % by weight

$SO_4$: 20.5 % by weight

Ignition loss: 43.9 %

BET specific surface area: 11.7 $m^2/g$

∗ Measurement by observation through electron microscope (at magnification of 1000 times)

Length/diameter ratio: 10 - 40

Average diameter: 0.3 μm

Length: approximately 5 - 15 μm

Example 4

An autoclave having a volume of about 100 liters was charged with 60 liters of a magnesium sulfate aqueous solution containing 1.4 mol/l of magnesium sulfate, and 91.4 g of nickel sulfate·$7H_2O$ and 93.7 g of zinc sulfate·$h_2O$ were added to, and dissolved in, the magnesium sulfate aqueous solution. Then, 645 g of magnesium oxide was added to, and dispersed in, the resultant mixed solution. The resultant mixture was hydrothermally reacted at 170°C for 5 hours. The reaction product was recovered by washing and filtering the reaction mixture, and then dispersed in water to form a slurry. Then, 1 liter of a sodium distearylphosphate solution containing 40 g/l of sodium distearylphosphate was added, and the resultant mixture was stirred at 80°C for 1 hour. The reaction mixture was filtered, and the remaining solid was washed and dried to give a reaction product. The reaction product was measured by powder X-ray diffractometry and chemical analysis. The reaction product was a fibrous basic magnesium sulfate compound containing 2.3 % by weight of an ether extract and having the formula of $Mg_{5.8}Ni_{0.1}Zn_{0.1}(OH)_{10}SO_4·3H_2O$.

∗Chemical analysis values

MgO: 49.4 % by weight

NiO: 1.60 % by weight

ZnO: 0.72 % by weight

$SO_4$: 20.3 % by weight

Ignition loss: 46.3 %

BET specific surface area: 6.0 $m^2/g$

∗ Measurement by observation through electron microscope (at magnification of 1000 times)

Length/diameter ratio: 15 - 60

Average diameter: 0.5 μm

Length: approximately 5 - 30 μm

Comparative Example 1

Magnesium hydroxide (trade name, Kisuma 5B, supplied by Kyowa Chemical Industry Co., Ltd.) and fibrous basic magnesium sulfate were mixed with polypropylene of impact resistance grade in amounts (part by weight) shown in Table 1, and the resultant mixture was melt-kneaded with a twin-screw extruder at about 230°C. The melt was injection-molded at about 230°C to prepare test pieces, and the test pieces were measured for physical properties. Table 1 shows the results.

For the preparation of the above test pieces, the fibrous basic magnesium sulfate ($Mg_6(OH)_{10}SO_4·3H_2O$) had been prepared as follows.

Magnesium oxide was dispersed in a magnesium sulfate aqueous solution, and the mixture was hydrothermally reacted at 170°C for 3 hours. The reaction product was surface-treated with sodium oleate. The resultant product contained 1.5 % by weight of oleic acid. It was measured through an electron microscope (at a magnification of 1,000 times) to show the following.

Length/diameter ratio: 15 - 80

Average diameter: 0.7 μm

Length: approximately 10 - 60 μm

BET specific surface area: 4.0 $m^2/g$

The test pieces were measured for their physical properties as follows.

(1) Flame retardancy

Measured according to UL-94.

(2) Tensile strength, Flexural strength and Flexural modulus

Measured according to JIS K7113

Examples 5 - 8

The same magnesium hydroxide as that used in Comparative Example 1 and the fibrous basic magnesium sulfate compound prepared in Example 1, 2, 3 or 4 were mixed with the same polypropylene of impact resistance grade as that used in Comparative Example 1 in amounts shown in Table 1, and the resultant mixture was melt-kneaded with a twins-crew extruder at about 230°C. The melt was injection-molded at about 230°C to prepare test pieces, and the test pieces were measured for physical properties in the same manner as in Comparative Example 1. Table 1 shows the results. In addition, the fibrous basic magnesium sulfate compounds used in Examples 5, 6, 7 and 8 corresponded to those prepared in Examples 1, 2, 3 and 4 in this order.

### Table 1

| | Poly-pro-pylene | Magnesium hydroxide | Fibrous basic magnesium sulfate | Flame retardancy UL-94VE 1/8 inch | Tensile strength $kgf/cm^2$ | Flexural strength $kgf/cm^2$ | Flexural modulus $kg/cm^2$ |
|---|---|---|---|---|---|---|---|
| CEx.1 | 40 | 55 | 5 | V-0 | 218 | 406 | 52,900 |
| | 40 | 50 | 10 | V-0 | 226 | 424 | 66,500 |
| | 40 | 40 | 20 | V-0 | 237 | 446 | 87,700 |
| | 40 | 30 | 30 | V-0 | 238 | 456 | 113,000 |
| | 44 | 46 | 10 | V-2 or lower | 216 | 425 | 48,200 |
| | 40 | 60 | - | V-0 | 200 | 380 | 45,000 |
| Ex.5 | 45 | 50 | 5 | V-1 | 245 | 454 | 52,900 |
| | 45 | 45 | 10 | V-0 | 257 | 468 | 58,400 |
| | 45 | 35 | 20 | V-0 | 271 | 486 | 75,500 |
| | 45 | 25 | 30 | V-0 | 284 | 508 | 82,300 |
| Ex.6 | 45 | 45 | 10 | V-0 | 240 | 440 | 54,000 |
| | 45 | 35 | 20 | V-0 | 252 | 450 | 71,000 |
| Ex.7 | 45 | 45 | 10 | V-1 | 230 | 419 | 52,500 |
| | 45 | 35 | 20 | V-0 | 241 | 431 | 67,900 |
| Ex.8 | 45 | 45 | 10 | V-0 | 248 | 452 | 56,600 |
| | 45 | 35 | 20 | V-0 | 260 | 469 | 73,310 |

Ex. = Example, CEx. = Comparative Example

## Claims

1. A fibrous basic magnesium sulfate compound of the formula (1),
$$Mg_{6-(x+y)}Ni_xM_y(OH)_{10}SO_4 \cdot 3H_2O \qquad (1)$$
wherein M is at least one divalent metal element selected from Ni, Co, Zn, Cu and Fe, $0 < x \leqq 1.5$, and $0 \leqq y \leqq 1.0$, provided that x and Y cannot simultaneously be zero.

2. A compound according to claim 1, wherein $0 < x \leqq 0.5$, and $0 \leqq y \leqq 0.5$.

3. A compound according to claim 1 or 2, having a length/diameter ratio of at least 10/1, an average diameter of 0.1 to 5 μm and a length of 0.1 to 1,000 μm.

4. A compound according to claim 1, 2 or 3, having a BET specific surface area of 30 m²/g or less.

5. A process for the production of a compound as claimed in any one of the preceding claims which comprises

6

the steps of;

(A) dissolving a sulfate, chloride or nitrate of at least one metal selected from Ni, Co, Zn, Cu and Fe in an aqueous solution of magnesium sulfate,

(B) dispersing or dissolving magnesium hydroxide or magnesium oxide in the aqueous solution from step (A) to prepare a dispersion or solution containing 0.1 to 20 % by weight of the magnesium hydroxide or magnesium oxide, and

(C) hydrothermally reacting the dispersion or solution from step (B) at a temperature between 100°C and 250°C.

6. A process according to claim 5, wherein the aqueous solution of magnesium sulfate contains 0.1 to 3 mol/l of magnesium sulfate.

7. Use of a fibrous basic magnesium sulfate compound as claimed in any one of claims 1 to 4 as a flame-retardant aid.

8. A flame-retardant resin composition containing 20 to 60 parts by weight of a polyolefin resin, 5 to 45 parts by weight of, as flame-retardant aid, a compound as claimed in any one of claims 1 to 4 and 15 to 50 parts by weight of a flame retardant.

9. A composition according to claim 8, wherein the flame retardant is aluminum hydroxide and/or magnesium hydroxide.

10. Shaped articles of a composition as claimed in claim 8 or 9.

## European Patent Office

## EUROPEAN SEARCH REPORT

Application Number

EP 92 31 0745

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 511 020 (KABUSHIKI KAISHA KAISUI KAGAKU KENKYUJO)<br>* the whole document * | 1-10 | C01G1/10<br>C01F5/40<br>C01G53/00<br>C01G51/00 |
| A | GB-A-1 523 531 (NL INDUSTRIES)<br>* page 8 - page 9; example 1 * | 1,5,8 | C01G9/00<br>C01G3/00<br>C01G49/00 |
| A | US-A-5 036 127 (KOUHEI UENO)<br>* column 4, line 10 - line 30; claim 6 * | 1-3 | C04B35/00<br>D01F9/08 |
| A | US-A-4 997 871 (KOUHEI UENO)<br>* column 3, line 15 - line 65 * | 5 | |
| A | DATABASE WPIL<br>Derwent Publications Ltd., London, GB;<br>AN 91-069102<br>& JP-A-3 017 155 (UBE INDUSTRIES)<br>* abstract * | 1,3,4,5 | |

| | | | TECHNICAL FIELDS SEARCHED (Int. Cl.5) |
|---|---|---|---|
| | | | C01G<br>C01F<br>C04B<br>D01F |

The present search report has been drawn up for all claims

| Place of search | Date of completion of the search | Examiner |
|---|---|---|
| THE HAGUE | 02 MARCH 1993 | libberecht-verbeeck |